# EUROPEAN PATENT APPLICATION

(11) **EP 2 131 623 A2**
(43) Date of publication of application: **09.12.2009**
(21) Application number: 09161616.9
(22) Date of filing: 01.06.2009
(51) Int. Cl.: H04W 72/08

(54) **Radio communication apparatus, communication system and frequency resource allocation method**

(30) Priority: 05.06.2008 JP 2008148074
(71) Applicant: Fujitsu Ltd., Kawasaki-shi, Kanagawa 211-8588 (JP)
(72) Inventor: Hosokawa, Shin, Kawasaki-shi Kanagawa 211-8588 (JP)
(74) Representative: Fenlon, Christine Lesley

(57) **Abstract**

A radio communication apparatus, a communication system and a frequency resource allocation method are disclosed. The radio communication apparatus BS includes a user equipment selection unit 21, 24 selecting a predetermined number of user equipments UE#1 to UE#4 from plural user equipments UE#1 to UE#6 in connection, and a frequency resource allocation unit 22, 25 allocating frequency blocks FB1 to FB4 as divisions of a predetermined frequency resource to the user equipments UE#1 to UE#4. The frequency resource allocation unit 22, 25 allocates the frequency blocks preferentially to the user equipments with the reception quality thereof judged low, based on each reception quality measured in the communication with the user equipments UE#1 to UE#4 in each of the allocable frequency blocks.

## Description

### FIELD

This invention relates to a mobile communication system and a radio communication apparatus.

### BACKGROUND

In spite of the recent increase in the data transmission rate in the mobile communication system, the throughput actually secured is considerably dependent on the reception quality of the radio channel. In order to realize a high throughput of the mobile communication as a whole, therefore, a frequency resource high in reception quality is allocated desirably to each of the plural user equipments communicating with the base station at a given time.

Plural user equipments normally exist in a unit area of the mobile communication system. In the case where the necessity arises for the plural user equipments existing in the same unit area to transmit or receive the data at the same time point, the base station selects user equipments adapted for data transmission or reception, as the case may be, based on a predetermined method and allocates the frequency resources to the selected user equipments.

In the allocation of the frequency resources, the priority order of allocation is generally determined for each user equipment in accordance with the priority class, the radio reception quality between the base station and each user equipment, the transmission/reception data rate situation and the allocation frequency. Based on the priority order thus determined, the user equipments are sequentially selected and the frequency resources are allocated to the selected user equipments.

Japanese Laid-open Patent Publication No. 2006-50545 discloses a method in which the receiving station measures the reception channel state for each of the frequency blocks into which the frequency band is divided, and based on the reception channel state thus measured, the control information indicating the reception channel state of the frequency block to be notified to the transmitting station is generated, while the transmitting station allocates the radio resources for each frequency block based on the radio resource allocation index for each frequency block determined according to the control information indicating the reception channel state of the frequency block notified from the receiving station.

Japanese Laid-open Patent Publication No. 2007-221178, on the other hand, discloses a method in which the data is transmitted preferentially to the other party of communication in a better channel state utilizing at least one frequency block containing at least one carrier frequency.
Further, Japanese Laid-open Patent Publication No. 2005-117579 discloses a method in which the scheduler of a radio transmission unit divides the radio resources having a three-dimensional space element into plural unit radio resources corresponding to each base of the three-dimensional space, so that the radio resource areas weighted with a weighting factor determined according to the transmission state is allocated to each of the plural unit radio resources for plural packet flows.

### SUMMARY

Accordingly, it is an object of the invention to provide a radio communication apparatus, a communication system and a frequency resource allocation method in which the frequency resources inferior in radio reception state are not allocated or allocated less frequently to user equipments in the case where the frequency resources are allocated to plural user equipments and the data are transmitted between the base station and the plural user equipments at the same time point.

According to one aspect of the embodiment, there is provided a radio communication apparatus communicating with user equipments using a frequency band allocated to the user equipments from a predetermined frequency resource, including a user equipment selection unit selecting a predetermined number of user equipments from the plural user equipments in connection, and a frequency resource allocation unit allocating the frequency blocks as divisions of the frequency resource to each of the selected user equipments, wherein the frequency resource allocation unit allocates the frequency blocks to the user equipments in the ascending order of reception quality measured in communication with the user equipments, which is measured for each of selected user equipments in each allocable frequency block.

According to another aspect of the embodiment, there is provided a frequency resource allocation method in which the radio communication apparatus allocates the frequency band for communication with the user equipments from a predetermined frequency resource, the method comprising selecting a predetermined number of user equipments from the plural user equipments in connection and allocating the frequency blocks as divisions of the frequency resource to each of the selected user equipments, wherein the allocable frequency blocks are allocated to the user equipments in the ascending order of reception quality measured in communication with the user equipments, which is measured for each of selected user equipments in each allocable frequency block.

The object and advantages of the invention will be realized and attained by means of the elements and combinations particularly pointedout in the claims. It is to be understood that both the foregoing general description and the following detailed description are exemplary and explanatory and are not restrictive of the invention, as claimed.

### BRIEF DESCRIPTION OF THE DRAWINGS

The present invention will be more clearly understood from the description as set below with reference to the accompanying drawings, wherein:
FIG. 1 is a diagram depicting the network configuration of a communication system;
FIG. 2 is a diagram depicting a first example of the base station having a configuration for allocating the frequency resources in the downlink.
FIG. 3 is a diagram depicting a first example of the user equipments having a configuration for allocating the frequency resources in the downlink.
FIG. 4 is a flowchart depicting a first example of the frequency resource allocation method.
FIG. 5 is a diagram explaining a first example of the priority order determination routine in the flowchart depicted in FIG. 4.
FIGs. 6A to 6D are graphs depicting an example of the reception quality of the user equipments UE#1 to UE#4, respectively, for each frequency block.
FIG. 6E is a diagram depicting the method of allocating the frequency blocks determined in the first example of the priority order determination routine.
FIG. 7 is a flowchart depicting a first example of the priority order determination routine in the flowchart of FIG. 4.
FIG. 8 is a diagram explaining a second example of the priority order determination routine in the flowchart depicted in FIG. 4.
FIGs. 9A to 9D are graphs depicting an example of the reception quality of the user equipments UE#1 to UE#4, respectively, in each frequency block.
Fig. 9E is a diagram depicting the method of allocating the frequency blocks determined in the second example of the priority order determination routine.
FIG. 10 is a flowchart depicting a second example of the priority order determination routine in the flowchart of FIG. 4.
FIG. 11 is a diagram explaining a third example of the priority order determination routine in the flowchart depicted in FIG. 4.
FIGs. 12A to 12D are graphs depicting an example of the reception quality of the user equipments UE#1 to UE#4, respectively, for each frequency block.
FIG. 12E is a diagram depicting the method of allocating the frequency blocks determined in the third example of the priority order determination routine.
FIG. 13 is a flowchart depicting a third example of the priority order determination routine in the flowchart of FIG. 4.
FIG. 14 is a diagram explaining a fourth example of the priority order determination routine in the flowchart depicted in FIG. 4.
FIGs. 15A to 15D are graphs depicting an example of the reception quality of the user equipments UE#1 to UE#4, respectively, for each frequency block.
FIG. 15E is a diagram depicting the method of allocating the frequency blocks determined in a fourth example of the priority order determination routine.
FIG. 16 is a flowchart depicting the fourth example of the priority order determination routine in the flowchart of FIG. 4.
FIG. 17 is a diagram explaining a fifth example of the priority order determination routine in the flowchart depicted in FIG. 4.
FIGs. 18A to 18D are graphs depicting an example of the reception quality of the user equipments UE#1 to UE#4, respectively, for each frequency block.
FIG. 18E is a diagram depicting the method of allocating the frequency blocks determined in a fifth example of the priority order determination routine.
FIG. 19 is a flowchart depicting the fifth example of the priority order determination routine in the flowchart of FIG. 4.
FIG. 20 is a flowchart depicting a modification of the method depicted in FIG. 4.
FIG. 21 is a flowchart depicting a first example of the priority order determination routine in the flowchart of FIG. 20.
FIG. 22 is a flowchart depicting a second example of the priority order determination routine in the flowchart of FIG. 20.
FIG. 23 is a flowchart depicting a third example of the priority order determination routine in the flowchart of FIG. 20.
FIG. 24 is a flowchart depicting a fourth example of the priority order determination routine in the flowchart of FIG. 20.
FIG. 25 is a flowchart depicting a fifth example of the priority order determination routine in the flowchart of FIG. 20.
FIG. 26 is a diagram depicting a second example of the base station configuration for allocating the frequency resources in the downlink.
FIG. 27 is a diagram depicting a second example of the configuration of the user equipment for allocating the frequency resources in the downlink.
FIG. 28 is a diagram depicting a table for storing the reception quality measured in each of the user equipments UE#1 to UE#n for each of the frequency blocks 1 to m.
FIG. 29 is a flowchart depicting a second example of the frequency resource allocation method.
FIG. 30 is a diagram depicting a first example of the base station configuration for allocating the frequency resources in the uplink.
FIG. 31 is a diagram depicting an example of the user equipment configuration for allocating the frequency resources in the uplink.
FIG. 32 is a flowchart depicting a third example of the frequency resource allocation method.
FIG. 33 is a diagram depicting a second example of the base station configuration for allocating the frequency resources in the uplink.
FIG. 34 is a flowchart depicting a fourth example of the frequency resource allocation method.

### DESCRIPTION OF EMBODIMENT(S)

In the case where the frequency resources having the best radio reception state for each user equipment are allocated to the user equipments in the descending order of allocation priority, a case may occur in which only the frequency resources inferior in the radio reception state are left for a given user equipment low in priority at the time of the frequency resource allocation to the particular user equipment. As a result, the base station unavoidably transmits and receives the data at a low throughput to and from the user equipments low in allocation priority order. This may constitute one factor causing the deterioration of the throughput of the mobile communication as a whole.

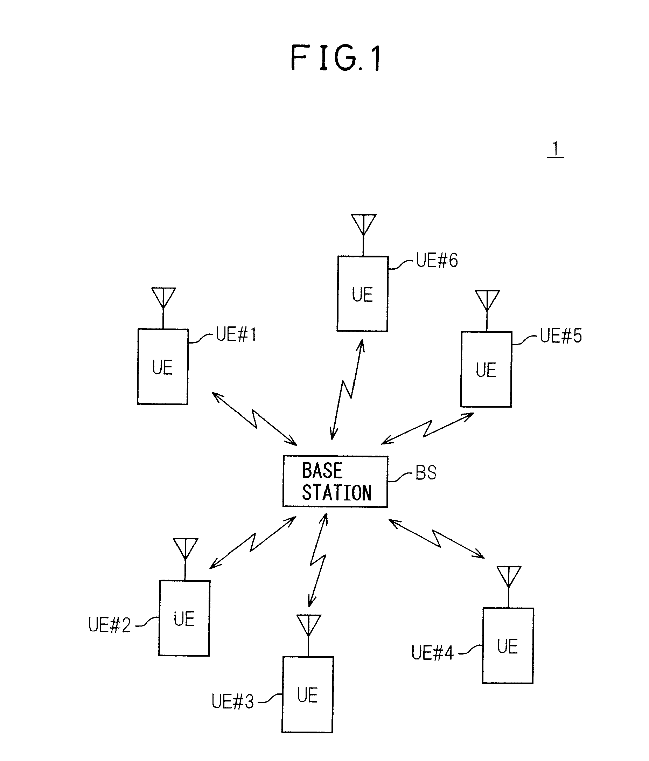

Embodiments are explained below with reference to the accompanying drawings. FIG. 1 is a diagram depicting the network configuration of a communication system. The communication system 1 includes plural user equipments UE#1 to UE#6 and a base station BS. Between the base station BS and any one of the user equipments UE#1 to UE#6 which transmits and receives the data to and from the base station BS, the downlink channel for transmitting the data from the base station BS to the user equipments and the uplink channel for transmitting the data from the user equipments to the base station BS are formed.

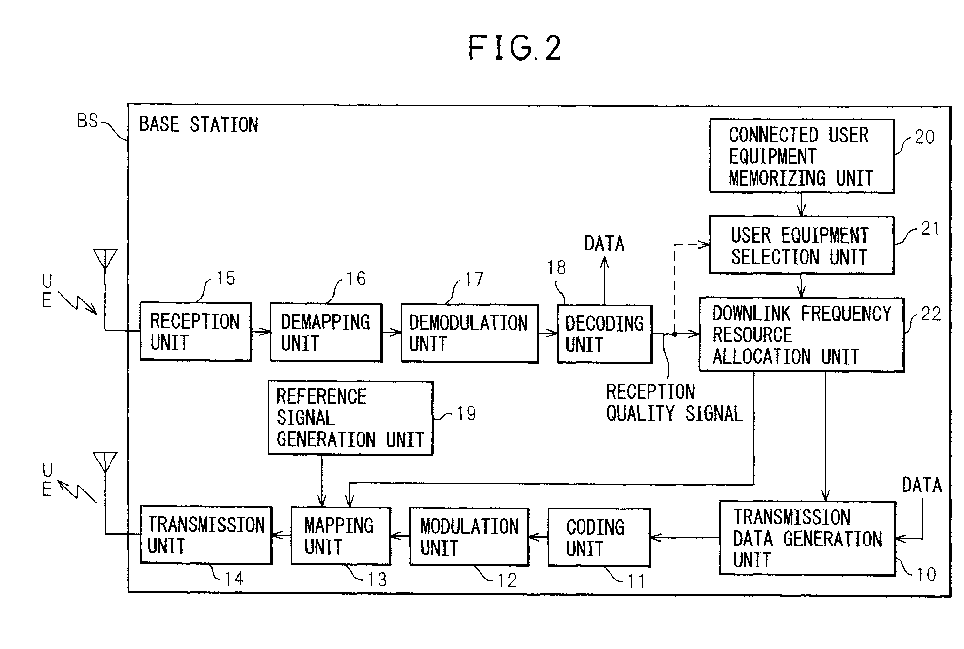

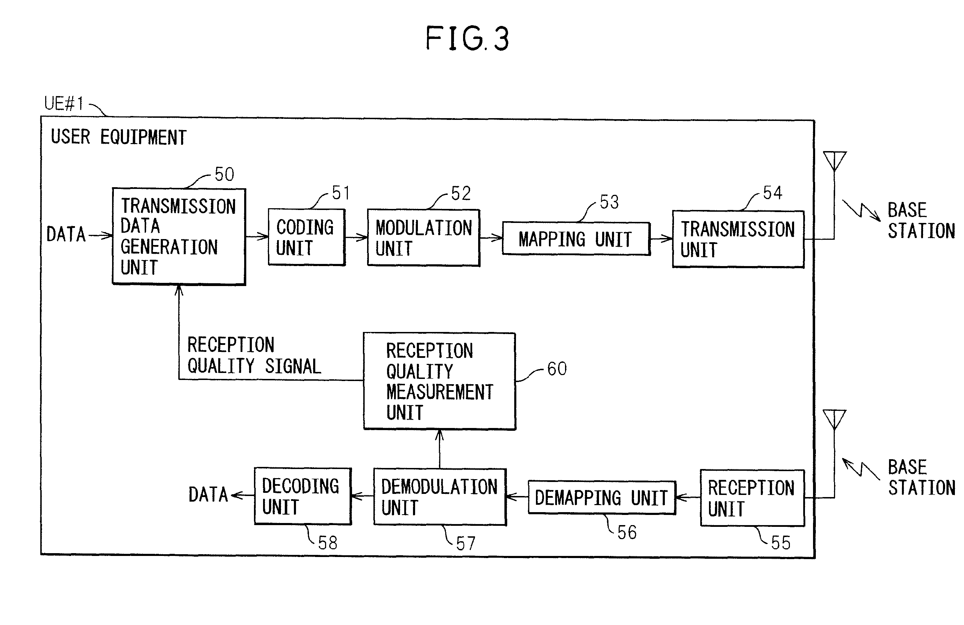

FIGs. 2 and 3 are diagrams depicting the first example of the configuration of the base station BS and the user equipment UE#1 for allocating the frequency resources in the downlink. The configuration of the user equipments UE#2 to UE#6 are also similar to that of the user equipment UE#1.
The base station BS includes a transmission data generating unit 10 generating the transmission data to the user equipments UE#1 to UE#6 based on the data received from a higher-layer such as an application layer, a coding unit 11 coding the transmission data generated by the transmission data generating unit 10, a modulation unit 12 generating a modulation signal modulated from the data coded by the coding unit 11, a mapping unit 13 generating a multiplexed transmission signal by mapping the modulation signal generated by the modulation unit 12 to the time slots and the frequencies of the radio signal allocated to the user equipments UE#1 to UE#6 and a transmission unit 14 transmitting the multiplexed transmission signal to the user equipments UE#1 to UE#6 as a downlink signal.

The base station BS also includes a reception unit 15 receiving the uplink signal from the user equipments UE#1 to UE#6, a demapping unit 16 retrieving the modulation signal from the time slots and the frequency band of the multiplexed received signal, a demodulation unit 17 demodulating the modulation signal and generating the coded data, and a decoding unit 18 decoding the coded data and retrieving and outputting the original data to a higher-layer.

The user equipment UE#1, on the other hand, includes a transmission data generating unit 50 generating the data to be transmitted to the base station BS based on the data received from a higher-layer such as an application layer, a coding unit 51 coding the transmission data generated by the transmission data generating unit 50, a modulation unit 52 generating the modulation signal by modulation of the data coded by the coding unit 51, a mapping unit 53 generating the transmission signal by mapping the modulation signal generated by the modulation unit 52 to the time slots and the frequencies of the radio signal allocated to the user equipment UE#1, and a transmission unit 54 transmitting the transmission signal to the base station BS as an uplink signal.

The user equipment UE#1 further includes a reception unit 55 receiving the downlink signal from the base station, a demapping unit 56 retrieving the modulation signal from the time slots and the frequency band in the multiplexed reception signal and allocated to the user equipment UE#1, a demodulation unit 57 generating the coded data demodulated from the modulation signal, and a decoding unit 58 decoding the coded data and retrieving and outputting the original data to a higher-layer.

The frequency resources usable in the downlink and uplink data transmission between the base station BS and the user equipments UE#1 to UE#6 are divided into plural frequency blocks in advance. The number of the frequency blocks into which the frequency resources are divided is not less than the maximum number of the user equipments to which the frequency resources are allocated in the same time slot.
In the multi-user MIMO (Multiple-Input Multiple-Output) transmission in which the same frequency resources are allocated to plural user equipments in the same time slot, on the other hand, the plural user equipments to which the same frequency resource is allocated are called the MU-MIMO group, and the number not less than the maximum number of the MU-MIMO groups to which the frequency resources are allocated in the same time slot is determined as the number of the frequency blocks.

The base station BS depicted in FIG. 2 has a reference signal generating unit 19 for generating the measurement signal for measuring the reception quality called the reference signal. The mapping unit 13 to which the reference signal is input maps the reference signal to all the frequency blocks used between the base station BS and the user equipments UE#1 to UE#6, and the reference signal is transmitted in each of all these frequency blocks.

The user equipment UE#1 depicted in FIG. 3 has a reception quality measurement unit 60 detecting the reference signal demodulated by the demodulation unit 57 and measuring the reception quality of the signal received in each downlink frequency block. The reception quality measurement unit 60 may measure, for example, the SIR (signal-to-interference power ratio) of the signal received in each downlink frequency block as an index of the reception quality. The reception quality signal obtained by measurement in the reception quality measurement unit 60 is contained in the transmission signal by the transmission data generating unit 50 and transmitted to the base station BS.

The base station BS depicted in FIG. 2 includes a connected user equipment memorizing unit 20 memorize the user equipments UE#1 to UE#6 currently connected to the network, a user equipment selection unit 21 selecting, from the plural user equipments UE#1 to UE#6, the user equipments to which the downlink frequency blocks are allocated, and a downlink frequency resource allocation unit 22 allocating, as downlink frequency resources, any of the frequency blocks to each user equipment selected by the user equipment selection unit 21 based on the reception quality of the respective user equipments which is obtained by decoding the signal received from the user equipments through the decoding unit 18 and which is measured for each frequency block.
In the user equipment selection unit 21, the user equipments to which the downlink frequency blocks are allocated from the plural user equipments UE#1 to UE#6 memorized in the connected user equipment memorizing unit 20 are selected in accordance with, for example, the priority class of the subscribers of the user equipments UE#1 to UE#6 memorized in the connected user equipment memorizing unit 20, the radio reception quality and the transmission/reception data rate situation between the base station BS and each of the user equipments UE#1 to UE#6, and how frequently the frequency resources are allocated to the user equipments UE#1 to UE#6.

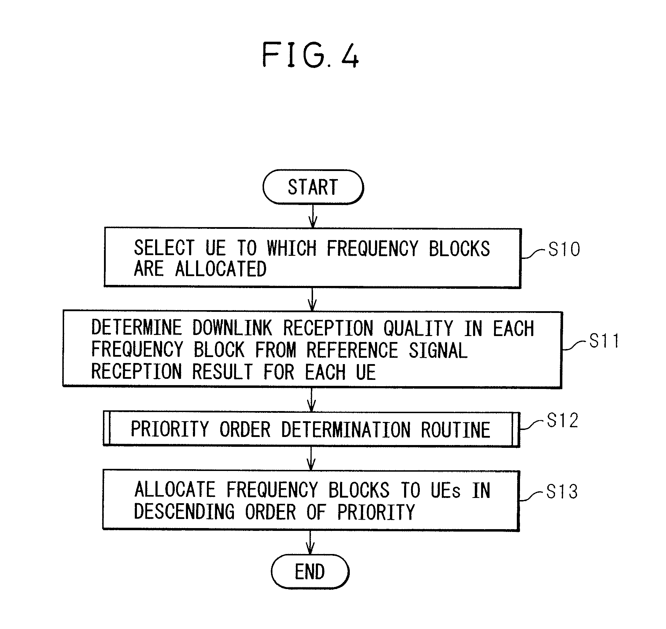

With reference to FIGs. 4 to 7, the operation of each component element of the base station BS and the user equipments UE#1 to UE#6 is explained. FIG. 4 is a flowchart depicting a first example of the frequency resource allocation method.
In each of the embodiments described below, the base station BS is assumed, for example, to allocate the frequency resources to a maximum of four user equipments in the same time slot, and the frequency resources usable for the downlink data transmission between the base station BS and the user equipments UE#1 to UE#6 are divided into the four frequency blocks FB1 to FB4.

In step S10, the user equipment selection unit 21 selects those of the plural user equipments UE#1 to UE#6 memorized in the connected user equipment memorizing unit 20 to which the downlink frequency blocks are allocated. In the case under consideration, assume that the user equipments UE#1 to UE#4 are selected from the user equipments UE#1 to UE#6.
In step S11, the reception quality measurement unit 60 of each of the user equipments UE#1 to UE#4 detects the reference signal transmitted in each of the frequency blocks FB1 to FB4 from the base station BS and measures the reception quality in each of the downlink frequency blocks FB1 to FB4. The reception quality signal measured by the reception quality measurement unit 60 is transmitted to the base station BS in the form contained in the transmission signal by the transmission data generating unit 50 of the user equipments UE#1 to UE#4, and input to the downlink frequency resource allocation unit 22 of the base station BS.

In step S12, the downlink frequency resource allocation unit 22 determines the priority order in which each of the frequency blocks FB1 to FB4 is allocated to the user equipments UE#1 to UE#4, based on the reception quality measured for each of the frequency blocks FB1 to FB4.

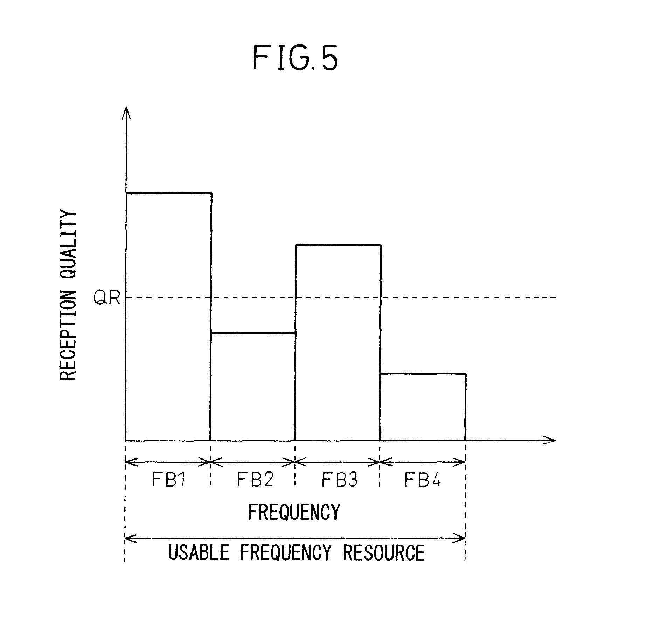

FIG. 5 is a diagram explaining a first example of the method to determine the order of priority in which the frequency blocks are allocated. In the downlink frequency resource allocation unit 22, the reception quality measured in each of frequency blocks FB1 to FB4 for each of the user equipments UE#1 to UE#4 is compared with a certain reference value QR. Then, the number of each frequency block for which the reception quality exceeding the reference value QR is measured is determined for each of the user equipments UE#1 to UE#4.

In the example depicted in FIG. 5, the reception quality measured in the frequency blocks FB1 and FB3 exceeds the reference value QR, and therefore, the reception quality is judged to exceed the reference value QR in two frequency blocks for the user equipment involved.
In the downlink frequency resource allocation unit 22, the priority order in which each of the frequency blocks FB1 to FB4 is allocated to the user equipments UE#1 to UE#4 is determined in such a manner that the user equipments associated with fewer frequency blocks having the reception quality measurement exceeding the predetermined reference value QR are higher in priority.
Specifically, the user equipments associated with a smaller number of the frequency blocks having the reception quality measurement exceeding the predetermined reference value QR are considered to have a smaller allowance of selection of the frequency blocks having a superior reception quality and a lower reception quality in communication with the base station BS. By allocating the frequency blocks to such user equipments in higher priority, therefore, the frequency blocks low in reception quality are allocated to the user equipments less frequently in the communication system 1.

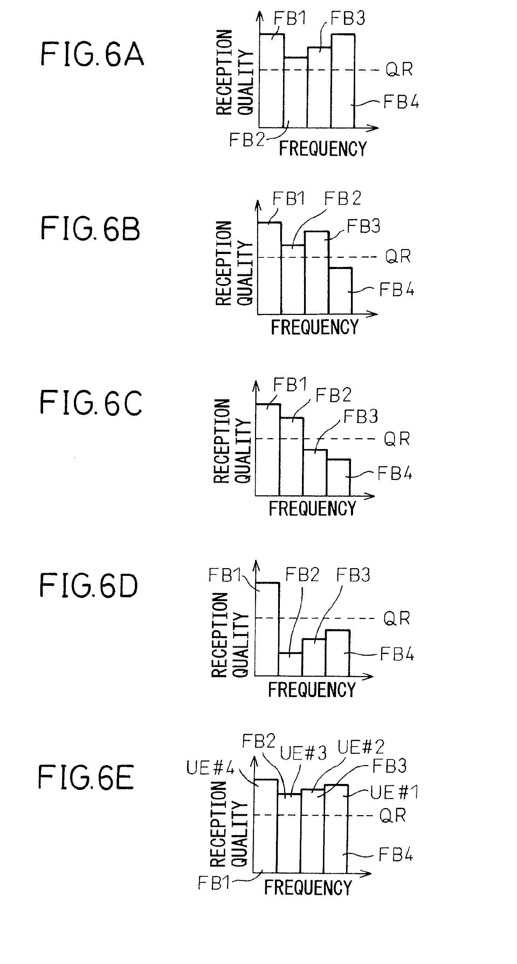

FIGs. 6A to 6D are graphs each depicting an example of the reception quality of the user equipments UE#1 to UE#4 in each frequency block, and FIG. 6E a diagram depicting the method of allocating the frequency blocks as determined by the first example of the priority order determining method. In the user equipments UE#1 to UE#4, as depicted in FIGs. 6A to 6D, the reception quality exceeds the reference value QR in four, three, two and one frequency block, respectively. Thus, the frequency blocks are allocated to the user equipments in the order of UE#4, UE#3, UE#2 and UE#1.

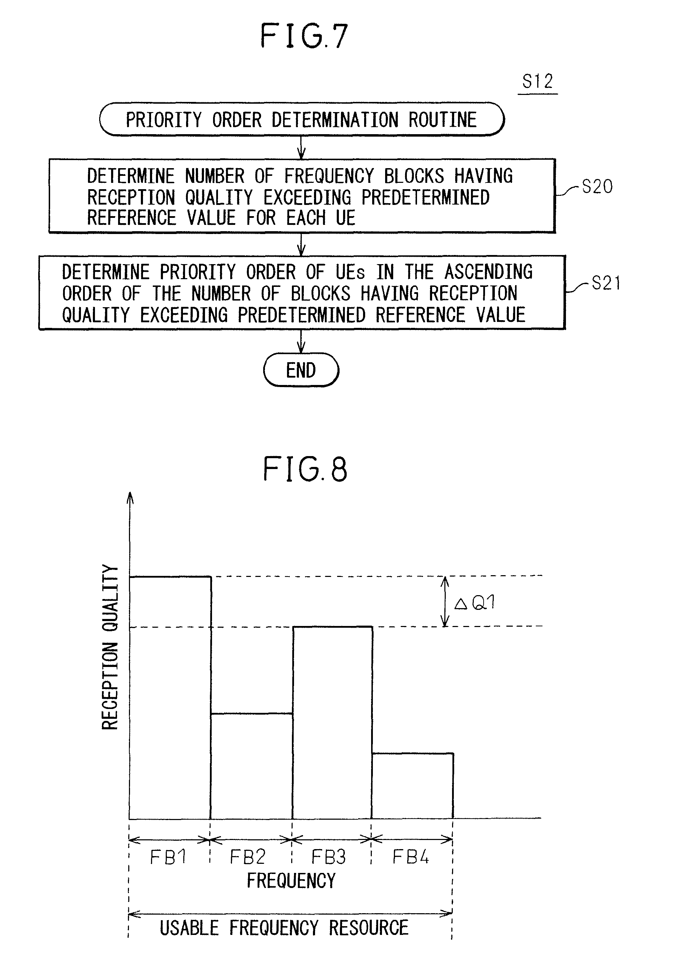

FIG. 7 is a flowchart depicting a first example of the priority order determination routine S12 in the flowchart of FIG. 4. In step S20, the number of the frequency blocks of which the reception quality measurement exceeds the predetermined reference value QR is determined for the user equipments UE#1 to UE#4.
In step S21, the priority order in which the frequency blocks FB1 to FB4 are allocated to the user equipments UE#1 to UE#4 is determined in such a manner that the priority order is higher for the user equipments associated with a fewer number of the frequency blocks having the reception quality measurement exceeding the predetermined reference value QR.

Returning to FIG. 4, the downlink frequency resource allocation unit 22 allocates the frequency blocks FB1 to FB4 to the user equipments UE#1 to UE#4 in step S13 in the priority order determined in step S12. Specifically, the downlink frequency resource allocation unit 22 allocates, to each of the user equipments the frequency block with the highest reception quality measurement for each user equipments, in the descending order of priority. In the process, that frequency block other than the one already allocated to a user equipment higher in priority which has the highest reception quality in the remaining frequency blocks is allocated to the second and other user equipments lower in priority.

As depicted in FIG. 6E, therefore, the frequency block FB1 associated with the highest reception quality measurement in all the frequency blocks FB1 to FB4 for the user equipment UE#4 is allocated first to the user equipment UE#4 having the highest priority order. The frequency block FB2 associated with the highest reception quality measurement for the user equipment UE#3 in the remaining frequency blocks FB2 to FB4 is allocated to the user equipment UE#3 having the second highest priority order. The frequency block FB3 associated with the highest reception quality measurement for the user equipment UE#2 in the remaining frequency blocks FB3 and FB4 is allocated to the user equipment UE#2 having the third highest priority order. Then, the remaining frequency block FB4 is allocated to the user equipment UE#1 having the lowest priority order.

From the downlink frequency resource allocation unit 22 depicted in FIG. 2, the frequency resource allocation signal designating which frequency block is allocated to which user equipment is output to the mapping unit 13 and the transmission data generating unit 10.
In accordance with the frequency resource allocation signal, the signal to be transmitted to each user equipment is mapped by the mapping unit 13 to the designated frequency block thereby to generate the transmission signal. In accordance with the frequency resource allocation signal, the transmission data generating unit 10 controls the data amount transmitted to each user equipment in one time slot.

Incidentally, in the case where only the frequency blocks of which the reception quality fails to keep up with the predetermined standard at the time of allocating a frequency block to a given user equipment, the process returns to step S10, in which another user equipment replacing the failing user equipment may be selected to follow steps S11 to S13 again. This is also the case with the embodiments described below.

The system and the method disclosed herein are applicable also to a case in which the frequency resources are allocated to the user equipments belonging to each MU-MIMO group in the multi-user MIMO transmission system. In this case, the reception quality for each of the frequency blocks FB1 to FB4 is measured for each MU-MIMO group, and based on the reception quality thus measured for each of the frequency blocks FB1 to FB4, each MU-MIMO group is allocated to each of the frequency blocks FB1 to FB4. This is also the case with the embodiments described below.

FIG. 8 is a diagram explaining the second example of the priority order determination routine S12 in the flowchart depicted in FIG. 4. The downlink frequency resource allocation unit 22 determines, for each of the user equipments UE#1 to UE#4, the difference ΔQ1 between the highest reception quality and the second highest reception quality measured in the frequency blocks FB1 to FB4.
The downlink frequency resource allocation unit 22 determines the priority order in which each of the frequency blocks FB1 to FB4 is allocated to the user equipments UE#1 to UE#4 in such a manner that the priority order is higher for the user equipments larger in the reception quality difference ΔQ1.

Specifically, the user equipments larger in the difference ΔQ1 between the highest reception quality and the second highest reception quality are considered to have a lower reception quality of the frequency blocks other than those having the highest reception quality. Therefore, the frequency blocks are allocated to such user equipments in high priority assuming that these user equipments have a smaller allowance for selection of the frequency blocks high in reception quality and a lower reception quality for communication with the base station BS.

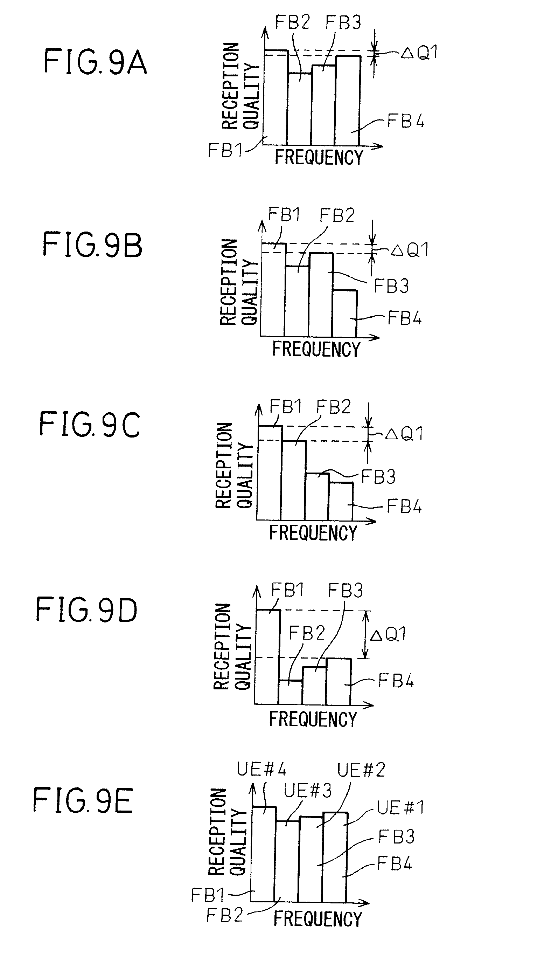

FIGs. 9A to 9D are graphs depicting an example of the reception quality of each of the frequency blocks for the user equipments UE#1 to UE#4, and FIG. 9E a diagram depicting the method of allocating the frequency blocks as determined by the second example of the priority order determination routine S12. As depicted in FIGs. 9A to 9D, the difference ΔQ1 of the reception quality of the user equipments UE#1 to UE#4 is larger in that order. Therefore, the frequency blocks are allocated to the user equipments UE#4, UE#3, UE#2, UE#1 in that order.

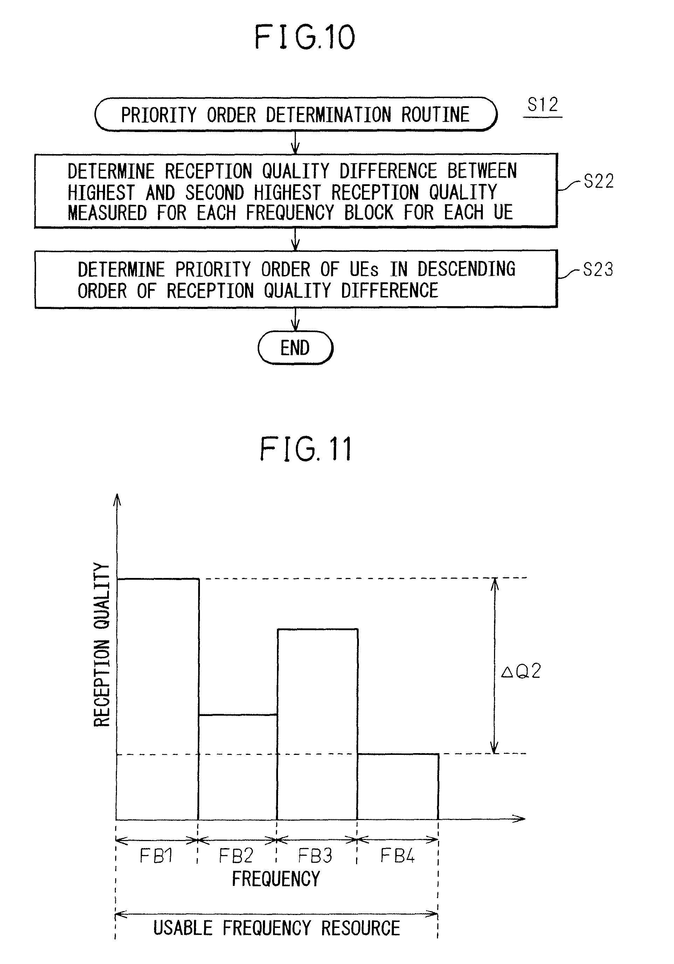

FIG. 10 depicts a flowchart of the second example of the priority order determination routine S12 in the flowchart of FIG. 4. In step S22, the difference ΔQ1 between the highest reception quality and the second highest reception quality measured in the frequency blocks FB1 to FB4 is determined for each of the user equipments UE#1 to UE#4. In step S23, the priority order in which the frequency blocks FB1 to FB4 are allocated to the user equipments UE#1 to UE#4 is determined in such a manner that the user equipments larger in the reception quality difference ΔQ1 are higher in priority.

As depicted in FIG. 9E, therefore, first, the frequency block FB1 with the highest reception quality measurement for the user equipment UE#4 in all the frequency blocks FB1 to FB4 is allocated to the user equipment UE#4 having the highest priority. The frequency block FB2 with the highest reception quality measurement for the user equipment UE#3 in the remaining frequency blocks FB2 to FB4 is allocated to the user equipment UE#3 having the second highest priority, and the frequency block FB3 with the highest reception quality measurement for the user equipment UE#2 in the remaining frequency blocks FB3 and FB4 is allocated to the user equipment UE#2 having the third highest priority. The remaining frequency block FB4 is allocated to the user equipment UE#1 having the lowest priority.

FIG. 11 is a diagram explaining a third example of the priority order determination routine S12 in the flowchart of FIG. 4. The downlink frequency resource allocation unit 22 determines, for each of the user equipments UE#1 to UE#4, the difference ΔQ2 between the highest reception quality and the lowest reception quality measured in the frequency blocks FB1 to FB4.
In the downlink frequency resource allocation unit 22, the priority order in which the frequency blocks FB1 to FB4 are allocated to the user equipments UE#1 to UE#4 is determined in such a manner the user equipments having a larger reception quality difference ΔQ2 are higher in priority.

Specifically, the user equipments having a larger difference ΔQ2 between the highest reception quality and the lowest reception quality are considered lower in the reception quality of the frequency blocks other than that having the highest reception quality. In these user equipments, therefore, the allowance for selection of the frequency blocks having a high reception quality is so small that the reception quality in communication with the base station BS is considered low, and the frequency blocks are allocated to these user equipments in a higher priority.

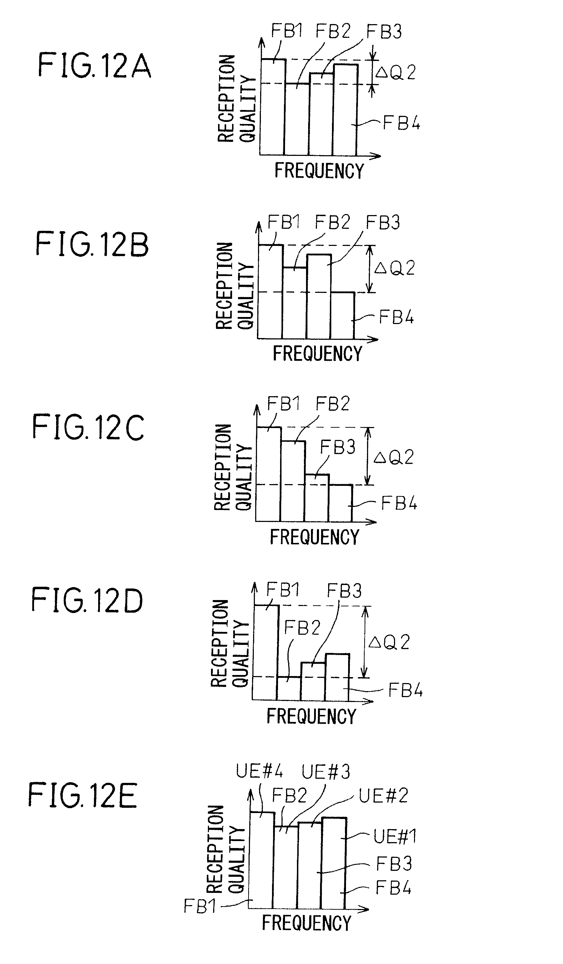

FIGs. 12A to 12D are graphs depicting an example of the reception quality in each frequency block for each of the user equipments UE#1 to UE#4, and FIG. 12E a diagram depicting a method of allocating the frequency blocks determined by the third example of the priority order determination routine S12. As depicted in FIGs. 12A to 12D, the reception quality difference ΔQ2 of the user equipments UE#4 to UE#1 is higher in that order. The frequency blocks are allocated, therefore, to the user equipments UE#4, UE#3, UE#2, UE#1 in that order of priority.

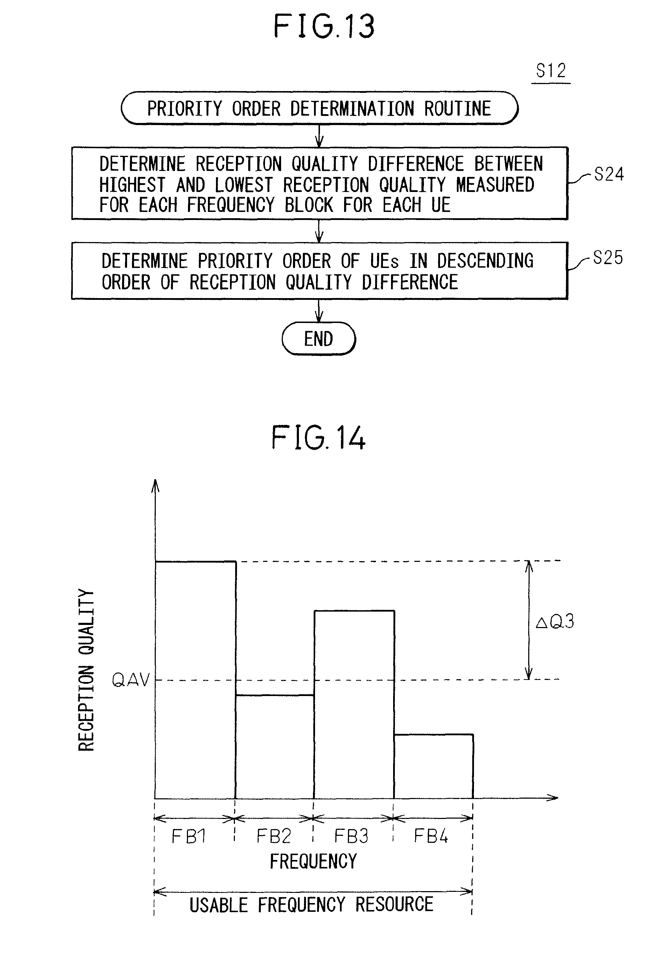

FIG. 13 is a flowchart depicting the third example of the priority order determination routine S12 in the flowchart of FIG. 4. In step S24, the difference ΔQ2 between the highest reception quality and the lowest reception quality measured for each of the frequency blocks FB1 to FB4 is determined for each of the user equipments UE#1 to UE#4. In step S25, the priority order in which the frequency blocks FB1 to FB4 are allocated to the user equipments UE#1 to UE#4 is determined in such a manner that the user equipments having a higher reception quality difference ΔQ2 are higher in priority.

As depicted in FIG. 12E, therefore, first, the frequency block FB1 with the highest reception quality measurement for the user equipment UE#4 among all the frequency blocks FB1 to FB4 is allocated to the user equipment UE#4 having the highest priority order. Then, the frequency block FB2 with the highest reception quality measurement for the user equipment UE#3 among the remaining frequency blocks FB2 to FB4 is allocated to the user equipment UE#3 having the second highest priority order. Similarly, one of the remaining frequency blocks FB3 and FB4 which has the highest reception quality measurement for the user equipment UE#2, i.e. the frequency block FB3 is allocated to the user equipment UE#3 having the highest priority order for the user equipment UE#3. The remaining frequency block FB4 is allocated to the user equipment UE#1 having the lowest priority order.

FIG. 14 is a diagram explaining the fourth example of the priority order determination routine S12 in the flowchart depicted in FIG. 4. In the downlink frequency resource allocation unit 22, the difference ΔQ3 between the reception quality of the frequency block (the frequency block FB1 in the depicted case) having the highest reception quality measurement among the frequency blocks FB1 to FB4 and the average value QAV of the reception quality of the other frequency blocks is determined for each of the user equipments UE#1 to UE#4.

In the downlink frequency resource allocation unit 22, the priority order in which the frequency blocks FB1 to FB4 are allocated to the user equipments UE#1 to UE#4 is determined in such a manner that the user equipments having a larger reception quality difference ΔQ3 have a higher priority.

Specifically, a user equipment having a large difference ΔQ3 between the highest reception quality of a frequency block and the average reception quality value QAV of the other frequency blocks is considered to have a lower reception quality of the frequency blocks other than the one having the highest reception quality. Such a user equipment, therefore, is assumed to have a smaller allowance for selection of the frequency blocks having a high reception quality in communication with the base station BS, and the frequency blocks are allocated to the particular user equipment in a higher priority.

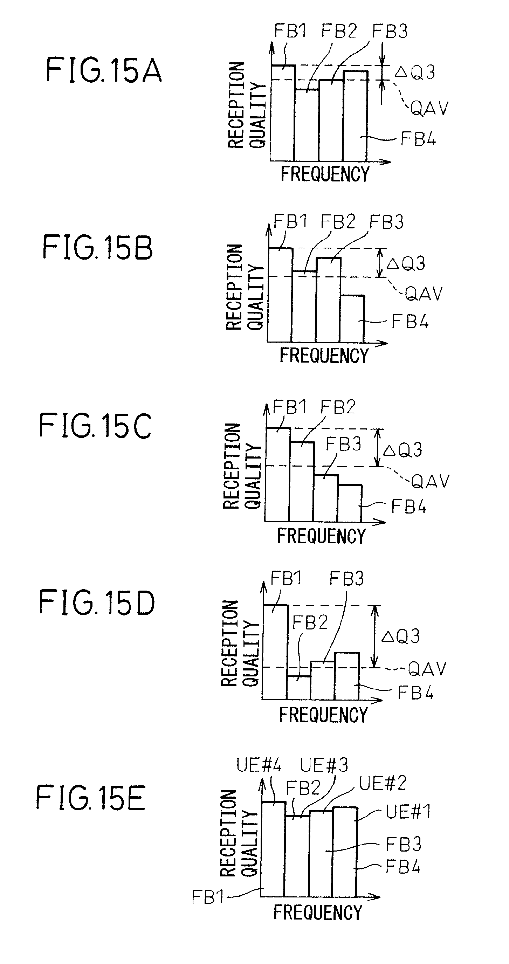

FIGs. 15A to 15D are graphs depicting an example of the reception quality of each frequency block in the user equipments UE#1 to UE#4. FIG. 15E is a diagram depicting the method of allocating the frequency blocks determined by the fourth example of the priority order determination routine S12. As depicted in FIGs. 15A to 15D, the user equipments UE#4 to UE#1 have the reception quality difference ΔQ3 in ascending order. Therefore, the frequency blocks are allocated to the user equipments UE#4, UE#3, UE#2, UE#1 in that order of priority.

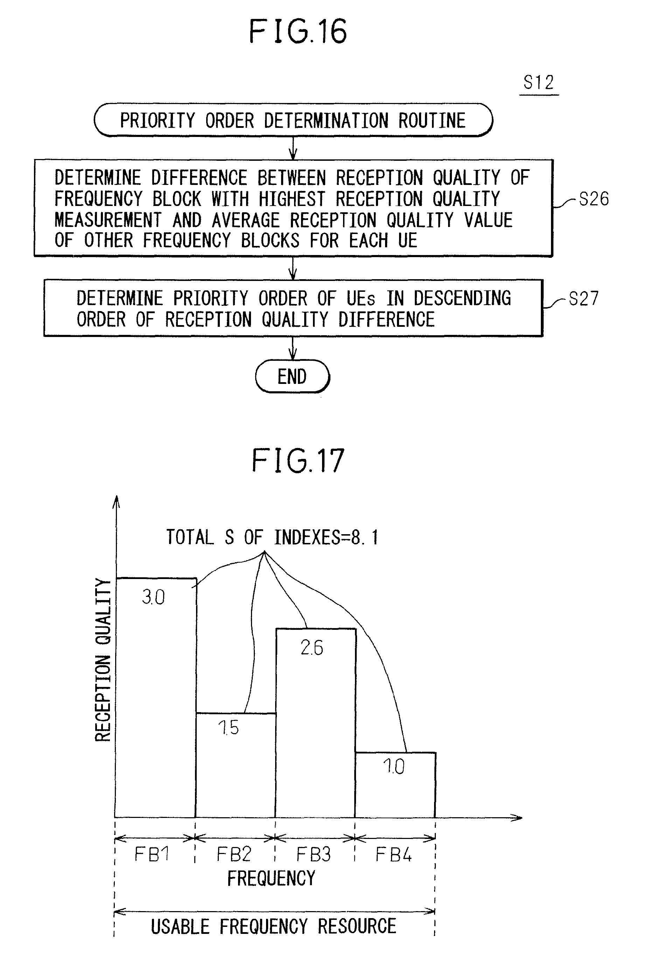

FIG. 16 is a flowchart depicting the fourth example of the priority order determination routine S12 in the flowchart of FIG. 4. In step S26, the difference ΔQ3 between the reception quality of a frequency block highest in the reception quality measurement and the average reception quality value QAV of the other ones of the frequency blocks FB1 to FB4 is determined for each of the user equipments UE#1 to UE#4. In step S27, the priority order in which the frequency blocks FB1 to FB4 are allocated to the user equipments UE#1 to UE#4 is determined in such a manner the user equipments having a larger reception quality difference ΔQ3 have a higher priority.

As depicted in FIG. 15E, first, the frequency block FB1 with the highest reception quality measurement for the user equipment UE#4 in all the frequency blocks FB1 to FB4 is first allocated to the user equipment UE#4 having the highest priority order. Then, the frequency block FB2 with the highest reception quality measurement for the user equipment UE#3 in the remaining frequency blocks FB2 to FB4 is allocated to the user equipment UE#3 having the second highest priority order. Similarly, the frequency block FB 3 with the highest reception quality measurement for the user equipment UE#2 in the remaining frequency blocks FB3 and FB4 is allocated to the user equipment UE#3 having the third highest priority order, and the remaining frequency block FB4 is allocated to the user equipment UE#1 having the lowest priority order.

FIG. 17 is a diagram depicting the fifth example of the priority order determination routine S12 in the flowchart of FIG. 4. In the downlink frequency resource allocation unit 22, the total value S of the indexes of the reception quality measured for the frequency blocks FB1 to FB4 is determined for each of the user equipments UE#1 to UE#4. In the depicted case, the index values of the reception quality measured for the user equipments UE#1 to UE#4 are 3.0, 1.5, 2.6 and 1.0, respectively, and the total value S thereof is 8.1.

In the downlink frequency resource allocation unit 22, the priority order in which the frequency blocks FB1 to FB4 are allocated to the user equipments UE#1 to UE#4 is determined in such a manner that the user equipments lower in the total value S of the indexes are higher in priority.
Specifically, the user equipments having a lower total value S of the reception quality indexes is assumed to be smaller in the allowance for selection of the frequency blocks high in reception quality and thus lower in the reception quality for communication with the base station BS, and therefore, the frequency blocks are allocated to such user equipments in a higher priority.

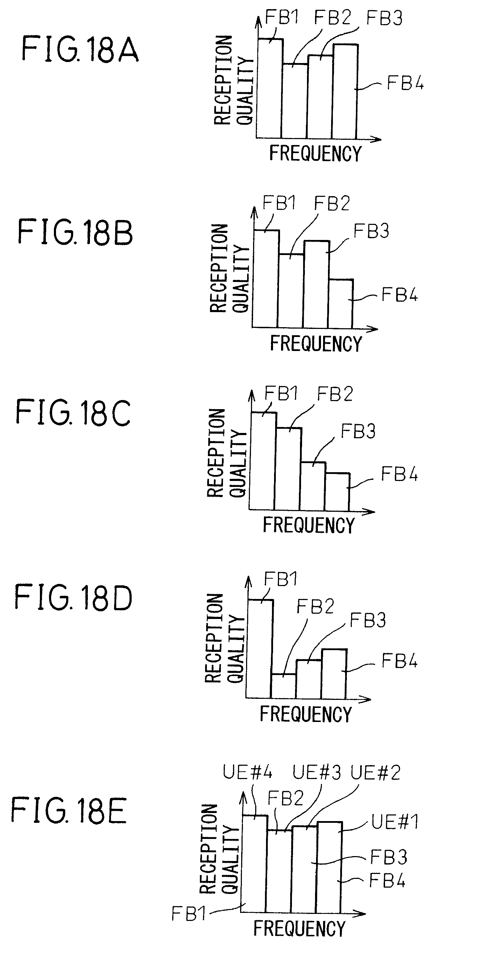

FIGs. 18A to 18D are graphs depicting an example of the reception quality in each frequency block for each for the user equipments UE#1 to UE#4, and FIG. 18E a diagram depicting the method of allocating the frequency blocks determined by the fifth example of the priority order determination routine S12. As depicted in FIGs. 18A to 18D, the total value S of the reception quality indexes of the user equipments UE#1 to UE#4 is high in ascending order. The frequency blocks are allocated, therefore, to the user equipments UE#4, UE#3, UE#2, UE#1 in that order of priority.

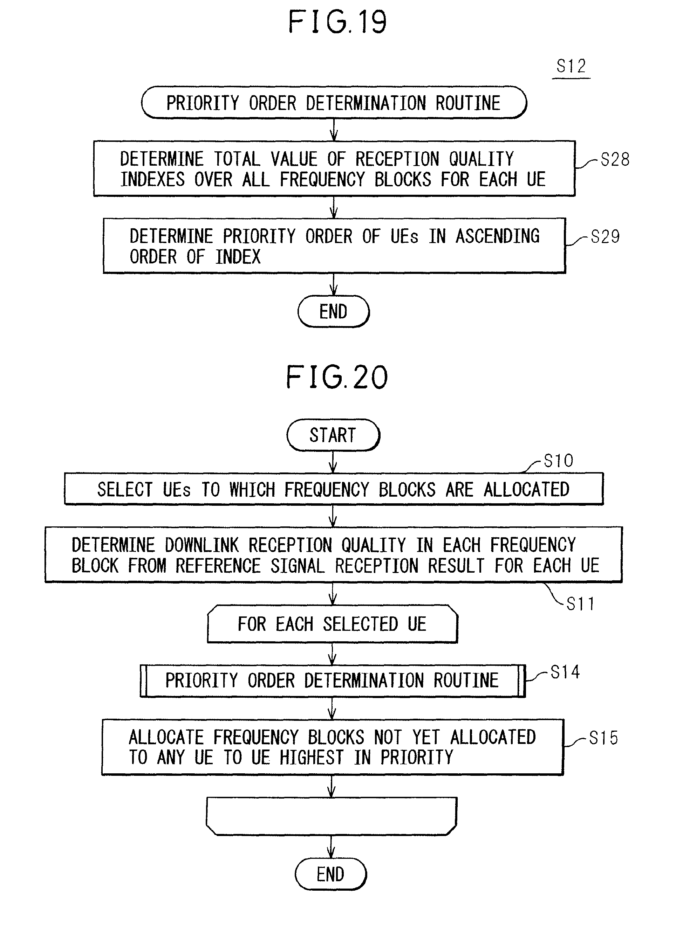

FIG. 19 is a flowchart depicting the fifth example of the priority order determination routine S12 in the flowchart of FIG. 4. In step S28, the total value S of the indexes of the reception quality measured for the frequency blocks FB1 to FB4 is determined for each of the user equipments UE#1 to UE#4. In step S29, the priority order in which the frequency blocks FB1 to FB4 are allocated to the user equipments UE#1 to UE#4 is determined in such a manner that the user equipments having a lower total value S of the indexes are higher in priority.

As depicted in FIG. 18E, therefore, first, the frequency block FB1 with the highest reception quality measurement for the user equipment UE#4 among all the frequency blocks FB1 to FB4 is allocated to the user equipment UE#4 having the highest priority. Then, the frequency block FB2 with the highest reception quality measurement for the user equipment UE#3 among the remaining frequency blocks FB2 to FB4 is allocated to the user equipment UE#3 having the second highest priority. Similarly, the frequency block FB 3 with the highest reception quality measurement for the user equipment UE#2 out of the two remaining frequency blocks FB3 and FB4 is allocated to the user equipment UE#2 having the third highest priority, and the remaining frequency block FB4 is allocated to the user equipment UE#1 having the lowest priority.

FIG. 20 is a flowchart depicting a modification of the method depicted in FIG. 4. According to the flowchart depicted in FIG. 4, the priority order of the user equipments UE#1 to UE#4 is determined in step S12, and the frequency blocks are allocated in the ascending order of priority in step S13.
On the other hand, the method depicted in FIG. 20 includes step S14 in the loop of repeating the process as many times as the user equipments UE#1 to UE#4 selected in step S11. In this step S14, the prevailing user equipment having the highest priority is determined by the downlink frequency resource allocation unit 22 based on the reception quality of the frequency blocks not yet allocated to any of the user equipments among all the frequency blocks FB1 to FB4 allocable by the base station BS to the user equipments UE#1 to UE#4.

In step S15 following step S14 in the same repetitive loop, the frequency block with the highest reception quality measurement for the user equipment selected in step S14 among the frequency blocks not yet allocated to any user equipment is allocated by the downlink frequency resource allocation unit 22 to the user equipment selected in step S14.

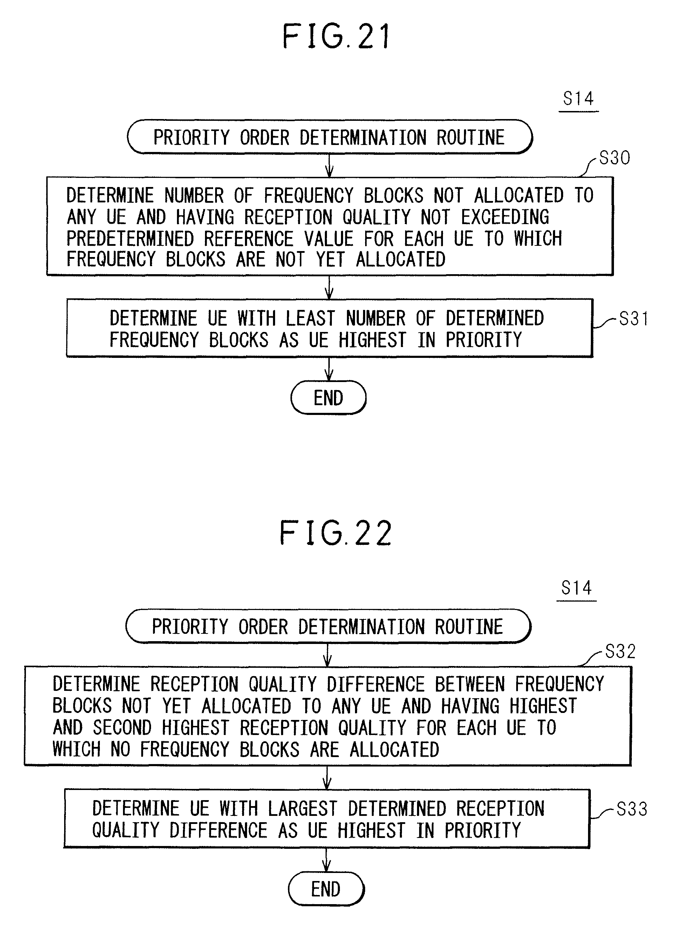

FIG. 21 is a flowchart depicting a first example of the priority order determination routine S14 in the flowchart of FIG. 20 as a modification of the routine depicted in FIG. 7.
In step S30, the reception quality of each frequency block not yet allocated to any user equipment is compared with a predetermined reference value QR for each of the user equipments to which not frequency block is allocated as yet, and the number of the frequency blocks with the reception quality measurement exceeding the predetermined reference value QR is determined by the downlink frequency resource allocation unit 22.
In step S31, the user equipment smallest in the number of the frequency blocks with the reception quality measurement exceeding the predetermined reference value QR is determined by the downlink frequency resource allocation unit 22 as a user equipment highest in priority.

FIG. 22 is a flowchart depicting a second example of the priority order determination routine S14 in the flowchart of FIG. 20 as a modification of the routine depicted in FIG. 10.
In step S32, the difference ΔQ1 between the highest reception quality and the second highest reception quality measured in each frequency block not yet allocated to any user equipment is determined by the downlink frequency resource allocation unit 22 for each user equipment to which no frequency block is allocated as yet.
In step S33, the user equipment having the largest reception quality difference ΔQ1 is determined by the downlink frequency resource allocation unit 22 as a user equipment highest in priority.

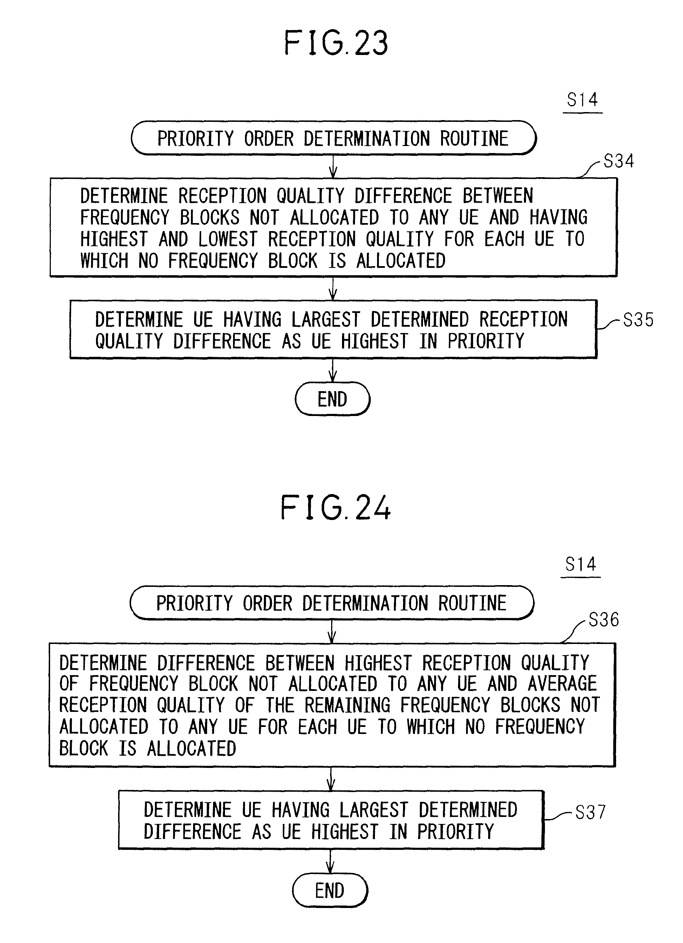

FIG. 23 is a flowchart depicting a third example of the priority order determination routine S14 in the flowchart of FIG. 20 as a modification of the routine depicted in FIG. 13.
In step S34, the difference ΔQ2 between the highest reception quality and the lowest reception quality measured for each frequency block not yet allocated to any user equipment is determined by the downlink frequency resource allocation unit 22 for each user equipment to which no frequency block is allocated as yet.
In step S35, the user equipment having the largest reception quality difference ΔQ2 is determined by the downlink frequency resource allocation unit 22 as a user equipment highest in priority.

FIG. 24 is a flowchart depicting a fourth example of the priority order determination routine S14 in the flowchart of FIG. 20 as a modification of the routine depicted in FIG. 16.
In step S36, the difference ΔQ3 between the highest reception quality measured for a frequency block and the average reception quality value QAV of the remaining frequency blocks, among the frequency blocks not yet allocated to any user equipment, is determined by the downlink frequency resource allocation unit 22 for each user equipment to which no frequency block is allocated as yet.
In step S37, the user equipment having the largest reception quality difference ΔQ3 is determined by the downlink frequency resource allocation unit 22 as a user equipment highest in priority.

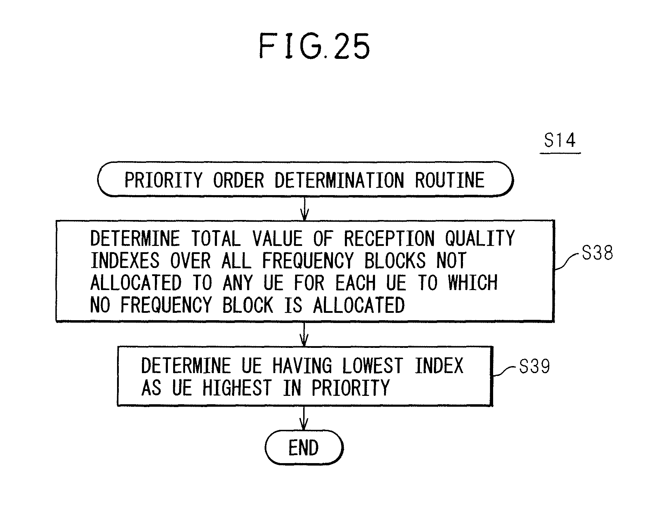

FIG. 25 is a flowchart depicting a fifth example of the priority order determination routine S14 in the flowchart of FIG. 20 as a modification of the routine depicted in FIG. 19.
In step S38, the total value S of the indexes of the reception quality measured for each frequency block not yet allocated to any user equipment is determined by the downlink frequency resource allocation unit 22 for each user equipment to which no frequency block is allocated as yet.
In step S39, the user equipment having the lowest total value S of the indexes is determined by the downlink frequency resource allocation unit 22 as a user equipment highest in priority.

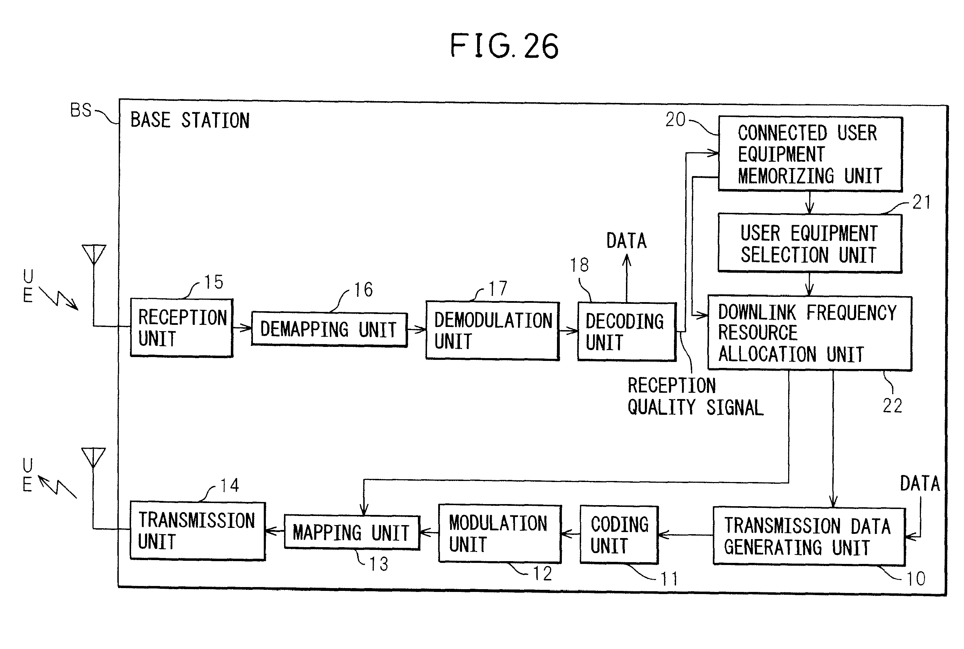

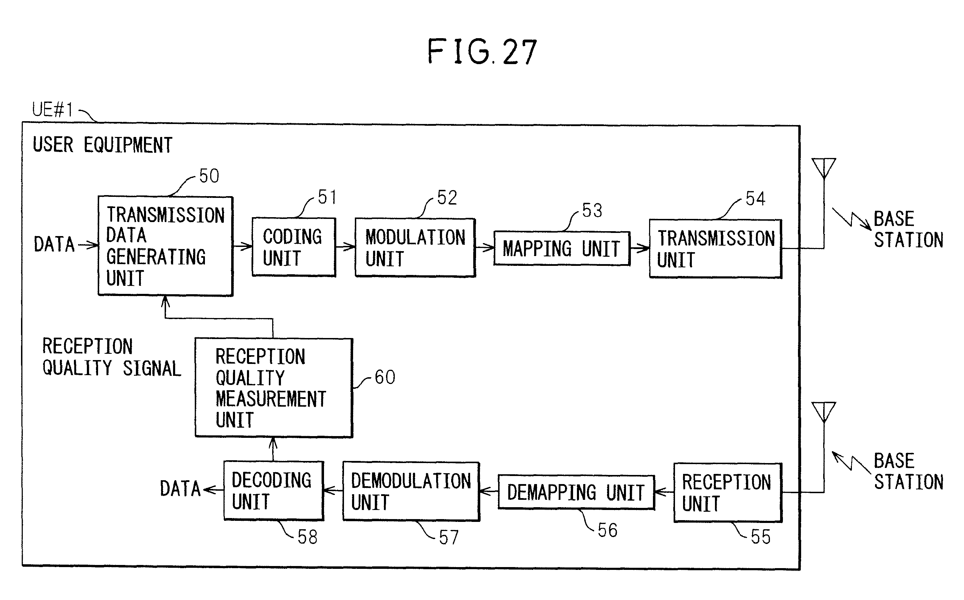

FIGs. 26 and 27 are diagrams depicting a second example of the configuration of the base station BS and the user equipment UE#1 having a configuration for allocating the downlink frequency resources. According to this embodiment, the reception quality measurement unit 60 of the user equipment UE#1 measures the estimated bit error rate (BER) and the estimated block error rate (BLER) of the data decoded by the decoding unit 58. The reception quality signal measured by the reception quality measurement unit 60 is contained in the transmission signal by the transmission data generating unit 50 and transmitted to the base station BS.

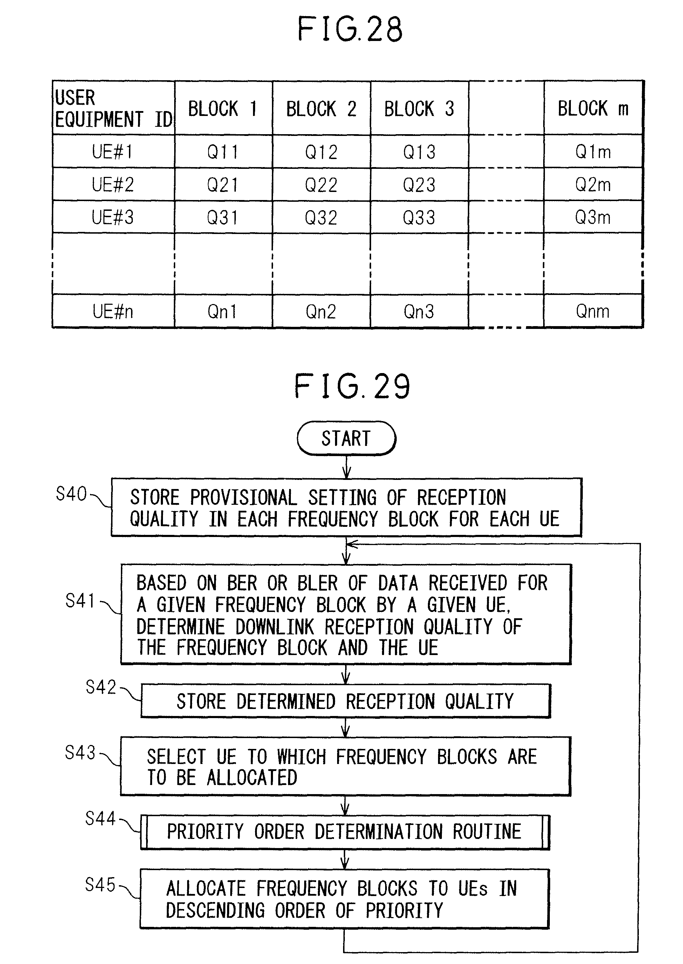

In the base station BS, the reception quality measured for each user equipment is stored for each frequency block. In the base station BS, for example, a table storing the reception quality measured for each frequency block at each user equipment may be stored in the connected user equipment memorizing unit 20. FIG. 28 is a diagram depicting the table storing the reception quality measured for each of the frequency blocks 1 to m at the user equipments UE#1 to UE#n.

The table of FIG. 28 indicates that the reception quality Q11 to Q1m are measured for the frequency blocks 1 to m, respectively, at the user equipment UE#1, for example. The frequency block allocated to each user equipment changes with time, and therefore, with the lapse of time, the values of the reception quality measured at each user equipment for each of the various frequency blocks are accumulated in the base station BS.
One of the frequency blocks is allocated, as a downlink frequency resource, to each user equipment selected by the user equipment selection unit 21 by the downlink frequency resource allocation unit 22 based on the reception quality measured for each frequency block at each user equipment and stored in the connected user equipment memorizing unit 20.

FIG. 29 is a flowchart depicting a second example of the frequency resource allocation method.
In step S40, the provisional setting (default value) of the reception quality stored for each frequency block for each user equipment is stored in the connected user equipment memorizing unit 20.
As described later, in the case where the data is transmitted to a given user equipment UE#x using a given frequency block FBy, the reception quality information such as BER and BLER of this data are measured, transmitted to the base station BS from the user equipment UE#x and stored in the connected user equipment memorizing unit 20.
The provisional setting described above is used as a default value of the reception quality measured by a given frequency block FBy for a given user equipment UE#x until the reception quality information measured by the frequency block FBy for the particular user equipment UE#x is stored in the connected user equipment memorizing unit 20.

In step S41, the data is transmitted to a given user equipment using a given frequency block. The reception quality measurement unit 60 of the user equipment to which the data is transmitted measures the BER and BLER of the decoded reception data as the reception quality of the frequency blocks used in the downlink. The reception quality signal thus measured is transmitted to the base station BS and stored in the connected user equipment memorizing unit 20 in step S42.

By repeating the process in the repetitive loop S41 to S45, the reception quality values measured for each of the various frequency blocks at each user equipment are stored in the connected user equipment memorizing unit 20.
In step S43, like in step S10 explained with reference to FIG. 4, the user equipments to which downlink frequency blocks are to be allocated are selected from the plural user equipments UE#1 to UE#6 memorized in the connected user equipment memorizing unit 20 by the user equipment selection unit 21. In the case under consideration, an explanation is given below on the assumption that the user equipments UE#1 to UE#4 are selected from the user equipments UE#1 to UE#6.

In steps S44 and S45, like in steps S12 and S13 explained with reference to FIG. 4, the downlink frequency resource allocation unit 22 determines the frequency blocks to be allocated to the user equipments UE#1 to UE#4.
As an alternative, the downlink frequency resource allocation unit 22 may determine the frequency blocks to be allocated to the user equipments UE#1 to UE#4 in a similar manner to steps S14 and S15 explained with reference to FIG. 20.

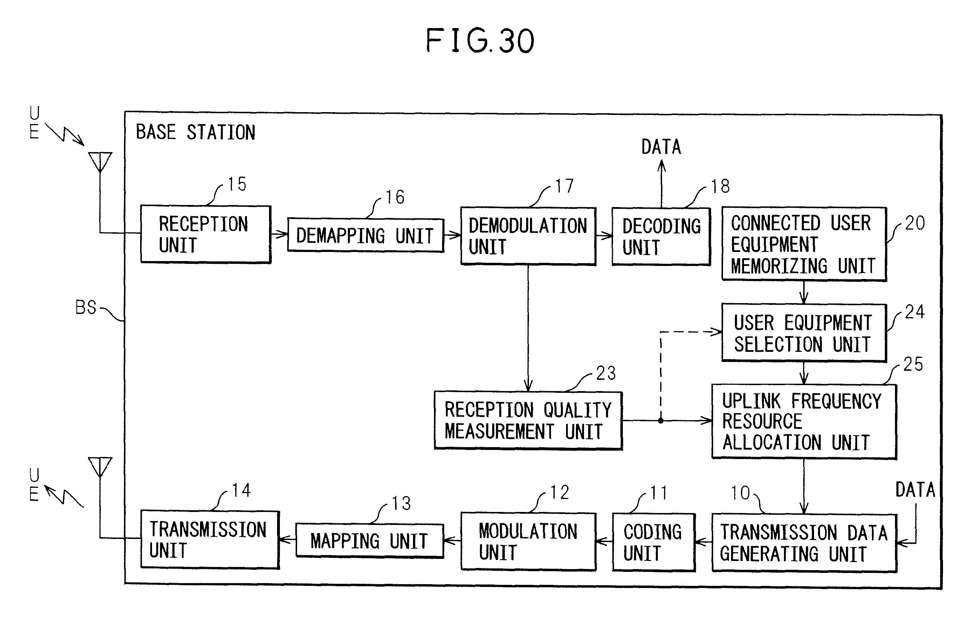

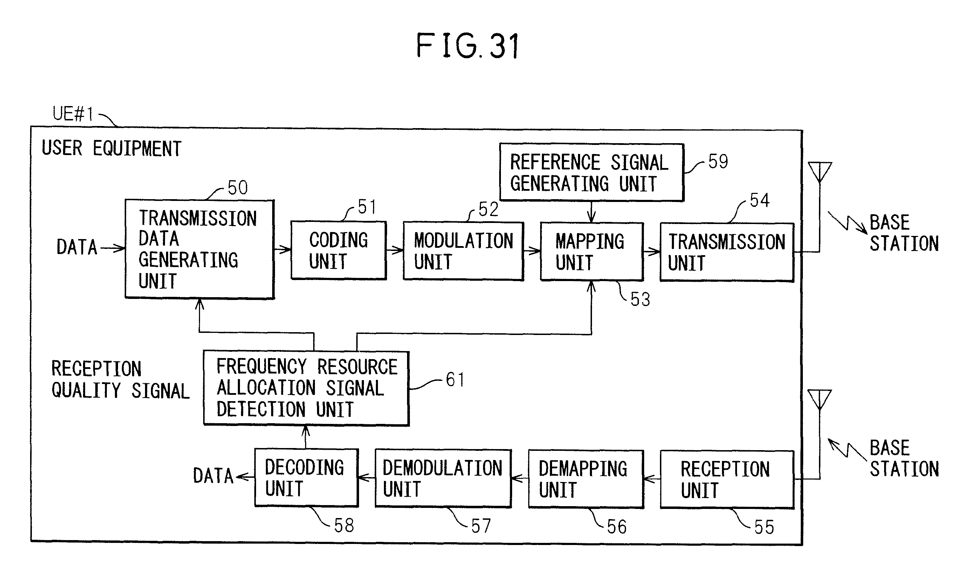

FIGs. 30 and 31 are diagrams depicting the first example of the configuration of the base station BS and the user equipment UE#1 having a configuration to allocate the uplink frequency resources. The base station BS and the user equipment UE#1 have a similar configuration to those depicted in FIGs. 2 and 3. Therefore, the similar component elements are designated by the same reference numerals.
The user equipment UE#1 depicted in FIG. 31 includes a reference signal generating unit 59 generating the measurement signal for reception quality measurement called the reference signal. A mapping unit 53 to which the reference signal is input maps the reference signal to all the frequency blocks used for communication between the base station BS and the user equipments UE#1 to UE#6, and the reference signal is transmitted in all of these frequency blocks.

The base station BS depicted in FIG. 30 includes a reception quality measurement unit 23 detecting the signal demodulated by the demodulation unit 17 from the reference signal transmitted from the user equipments UE#1 to UE#6, and measuring the reception quality of the signal received from the user equipments UE#1 to UE#6 for each uplink frequency blocks. The reception quality measurement unit 23 may measure, as an index of the reception quality, the SIR (signal-to-Interference power ratio) of the signal received in, for example, each uplink frequency block.

Further, the base station BS includes a user equipment selection unit 24 selecting the user equipments, from among the plural user equipments UE#1 to UE#6 memorized in the connected user equipment memorizing unit 20, to which the uplink frequency blocks are allocated, and an uplink frequency resource allocation unit 25 allocating any of the frequency blocks, as the uplink frequency resource, to each user equipment selected by the user equipment selection unit 24, based on the reception quality measured for each user equipment and each frequency block by the reception quality measurement unit 23.

In the user equipment selection unit 24, the user equipments to which the uplink frequency block is allocated is selected, from among the plural user equipments UE#1 to UE#6 memorized in the connected user equipment memorizing unit 20, in accordance with the priority class of the subscribers of the user equipments UE#1 to UE#6 memorized in the connected user equipment memorizing unit 20, the radio reception quality of the communication and the transmission/reception data rate between the base station BS and each of the user equipments UE#1 to UE#6 and how frequently the frequency resources are allocated to the user equipments UE#1 to UE#6.

From the uplink frequency resource allocation unit 25, the frequency resource allocation signal designating which uplink frequency block is allocated to which user equipment is output to the transmission data generating unit 10, and the frequency resource allocation signal is contained in the transmission signal by the transmission data generating unit 10 and transmitted to the user equipments UE#1 to UE#4 together with the transmission signal.
The user equipment UE#1 depicted in FIG. 31 includes a frequency resource allocation signal detection unit 61 detecting the frequency resource allocation signal obtained by decoding the reception signal from the base station BS by the decoding unit 58. The frequency resource allocation signal is output to the mapping unit 53 and the transmission data generating unit 50.
In the mapping unit 53, the signal to be transmitted to the base station BS is mapped to a designated frequency block in accordance with the frequency resource allocation signal thereby to generate the transmission signal. In the transmission data generating unit 50, the data amount transmitted to the base station BS in one time slot is controlled in accordance with the frequency resource allocation signal.

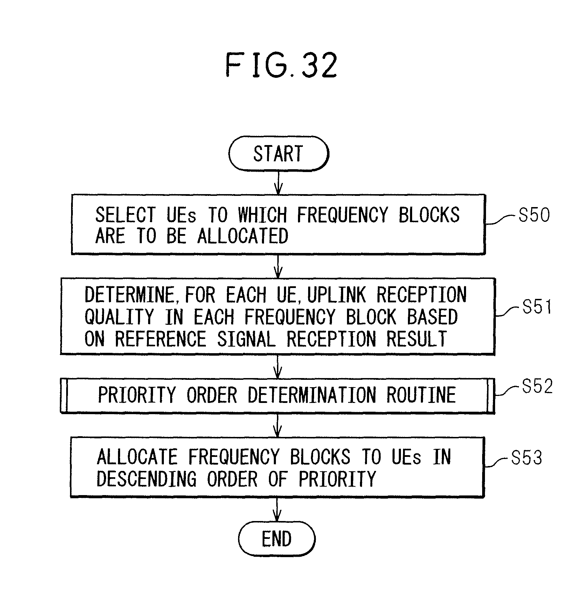

FIG. 32 is a flowchart depicting the third example of the frequency resource allocation method disclosed herein.
In step S50, the user equipments to which the uplink frequency blocks are allocated are selected by the user equipment selection unit 24 from among the plural user equipments UE#1 to UE#6 memorized in the connected user equipment memorizing unit 20. In the case under consideration, the description is continued below on the assumption that the user equipments UE#1 to UE#4 are selected from the user equipments UE#1 to UE#6.

In step S51, the reception quality measurement unit 23 of the base station BS detects the reference signal transmitted by each of the user equipments UE#1 to UE#4 to the base station BS in each of the frequency blocks FB1 to FB4 and measures the reception quality of each of the user equipments UE#1 to UE#4 in each of the uplink frequency blocks FB1 to FB4. The reception quality signal measured by the reception quality measurement unit 23 is input to the uplink frequency resource allocation unit 25.

In step S52, the priority order in which the frequency blocks FB1 to FB4 are allocated to the user equipments UE#1 to UE#4 is determined by the uplink frequency resource allocation unit 25 based on the reception quality measured for each of the user equipments UE#1 to UE#4. Also, in step S53, the uplink frequency resource allocation unit 25 allocates the frequency blocks FB1 to FB4 to the user equipments UE#1 to UE#4 in accordance with the priority order determined in step S52.

The process to determine the priority order and allocate the frequency blocks can be executed by the uplink frequency resource allocation unit 25 in a similar manner to the process executed by the downlink frequency resource allocation unit 22 to determine the priority order and allocate the frequency blocks in steps S12 and S13 explained above with reference to FIG. 4.
As an alternative, the uplink frequency resource allocation unit 25 may execute the process of determining the priority order and the process of allocating the frequency blocks in the same manner as the process executed by the downlink frequency resource allocation unit 22 in steps S14 and S15 explained above with reference to FIG. 20.

The uplink frequency resource allocation unit 25 outputs the frequency resource allocation signal to the transmission data generating unit 10, and the frequency resource allocation signal is transmitted to the user equipments UE#1 to UE#4. The frequency resource allocation signal detection unit 61 of each of the user equipments UE#1 to UE#4 detects the frequency resource allocation signal from the signal received from the base station BS.
In accordance with the frequency resource allocation signal, the mapping unit 53 maps the transmission signal to the base station BS, and the transmission data generating unit 50 controls the data amount transmitted in one time slot to the base station BS.

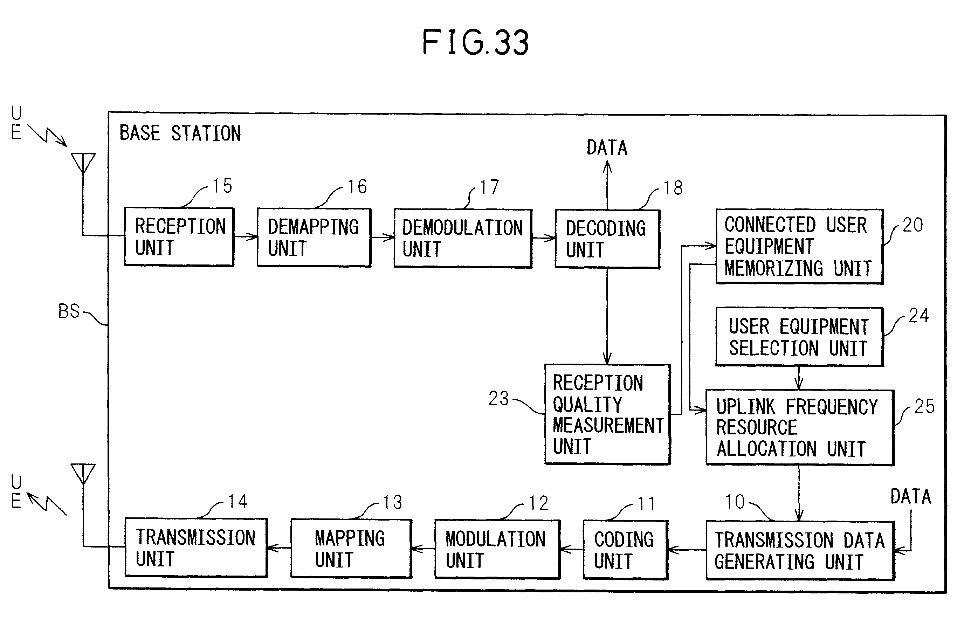

FIG. 33 is a diagram depicting the second example of the configuration of the base station BS for allocating the uplink frequency resources. The corresponding user equipment configuration may be similar to the configuration depicted in FIG. 31. According to this embodiment, the reception quality measurement unit 23 of the base station BS measures the estimated bit error rate (BER) and the estimated block error rate (BLER) of the data transmitted from each user equipment. Then, the reception quality measured for the data from each user equipment is stored for each frequency block in the base station BS. In the base station BS, for example, a table similar to the table depicted in FIG. 28 may be stored in the connected user equipment memorizing unit 20.

In the uplink frequency resource allocation unit 25, selected one of the frequency blocks is allocated, as an uplink frequency resource, to each of the user equipments selected by the user equipment selection unit 24 based on the reception quality measured based on the data transmitted in each frequency block from each user equipment memorized in the connected user equipment memorizing unit 20.

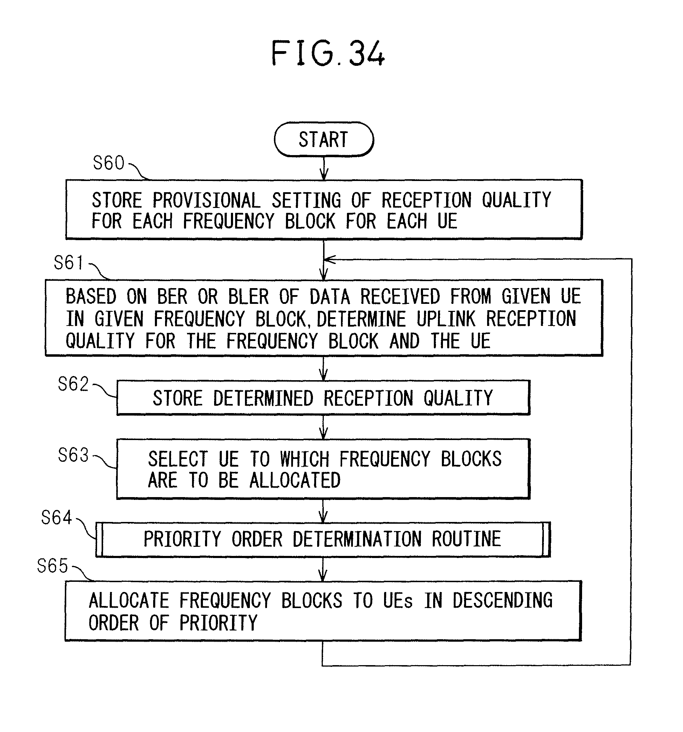

FIG. 34 is a flowchart depicting the fourth example of the frequency resource allocation method.
In step S60, the provisional setting (default value) of the reception quality stored for each frequency block for each user equipment is stored in the connected user equipment memorizing unit 20.

In step S61, the data is transmitted from a given user equipment using a given frequency block. In the reception quality measurement unit 23, the BER and BLER in the reception data decoded by the decoding unit 18 are measured as the reception quality of the uplink frequency blocks. The reception quality signal thus measured is stored in the connected user equipment memorizing unit 20 in step S62.

In step S63, like in step S50 explained above with reference to Fig. 32, the user equipments to which the uplink frequency blocks are allocated are selected by the user equipment selection unit 24 from the plural user equipments UE#1 to UE#6 memorized in the connected user equipment memorizing unit 20. In the case under consideration, the explanation is continued below on the assumption that the user equipments UE#1 to UE#4 are selected from the user equipments UE#1 to UE#6.

In step S64, the priority order in which the frequency blocks FB1 to FB4 are allocated to the user equipments UE#1 to UE#6 is determined by the uplink frequency resource allocation unit 25 based on the reception quality measured for each of the frequency blocks FB1 to FB4, and in step S65, the uplink frequency resource allocation unit 25 allocates the frequency blocks FB1 to FB4 to the user equipments UE#1 to UE#4 in accordance with the priority order determined in step S64.

The process of determining the priority order and the process of allocating the frequency blocks by the uplink frequency resource allocation unit 25 may be executed in a manner similar to the priority determination process and the frequency block allocation process executed by the downlink frequency resource allocation unit 22 in steps S12 and S13 explained above with reference to FIG. 4.
As an alternative, the uplink frequency resource allocation unit 25 may execute the priority order determination process and the frequency block allocation process in a similar manner to the process executed by the downlink frequency resource allocation unit 22 in steps S14 and S15 explained above with reference to Fig. 20.

In the apparatus and method disclosed herein, the frequency blocks are allocated preferentially to the user equipments determined low in the receiving quality in communication with the radio communication apparatus based on the reception quality in each of the frequency blocks. Therefore, the frequency resources inferior in the radio reception state for individual user equipments are allocated less frequently to the particular user equipments. As a result, the amount of the frequency resources used with an inferior radio reception state of the mobile communication system as a whole can be reduced, thereby making it possible to improve the throughput of the whole system.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. A radio communication apparatus (BS) communicating with a plurality of user equipments (UE#1 to UE#6) using a frequency band allocated to the user equipments from a predetermined frequency resource, comprising:
a user equipment selection unit (21) selecting a predetermined number of the user equipments (UE#1 to UE#4) from a plurality of the user equipments (UE#1 to UE#6) in connection; and
a frequency resource allocation unit (22, 25) allocating the frequency blocks as divisions of the frequency resource to each of the selected user equipments (UE#1 to UE#4);
wherein the frequency resource allocation unit (22, 25) allocates the frequency blocks to the user equipments in the ascending order of reception quality measured in communication with the user equipments (UE#1 to UE#4), which is measured for each of selected user equipments in each allocable frequency block.

2. The radio communication apparatus according to claim 1,
wherein the frequency resource allocation unit (22, 25) judges that the reception quality in the communication with a first user equipment is lower than the reception quality in the communication with a second user equipment in the case where the number of the allocable frequency blocks with the reception quality measurement higher than a predetermined value in the communication with the first user equipment is smaller than the number of the allocable frequency blocks with the reception quality measurement higher than the predetermined value in the communication with the second user equipment.

3. The radio communication apparatus according to claim 1,
wherein the frequency resource allocation unit (22, 25) judges that the reception quality in the communication with a first user equipment is lower than the reception quality in the communication with a second user equipment in the case where the difference of reception quality between the frequency block with the highest reception quality measurement and the frequency block with the second highest reception quality measurement in the communication with the first user equipment is larger than the difference of reception quality between the frequency block with the highest reception quality measurement and the frequency block with the second highest reception quality measurement in the communication with the second user equipment.

4. The radio communication apparatus according to claim 1,
wherein the frequency resource allocation unit (22, 25) judges that the reception quality in the communication with a first user equipment is lower than the reception quality in the communication with a second user equipment in the case where the difference of reception quality between the frequency block with the highest reception quality measurement and the allocable frequency block with the lowest reception quality measurement in the communication with the first user equipment is larger than the difference of reception quality between the frequency block with the highest reception quality measurement and the allocable frequency block with the lowest reception quality measurement in the communication with the second user equipment.

5. The radio communication apparatus according to claim 1,
wherein the frequency resource allocation unit (22, 25) judges that the reception quality in the communication with a first user equipment is lower than the reception quality in the communication with a second user equipment in the case where the difference between the reception quality of the allocable frequency block with the highest reception quality measurement and the average value of the reception quality of the remaining allocable frequency blocks in the communication with the first user equipment is larger than the difference between the reception quality of the allocable frequency block with the highest reception quality measurement and the average value of the reception quality of the remaining allocable frequency blocks in the communication with the second user equipment.

6. The radio communication apparatus according to claim 1,
wherein the frequency resource allocation unit (22, 25) judges that the reception quality of the communication with a first user equipment is lower than the reception quality of the communication with a second user equipment in the case where the total value of the indexes of the reception quality measured in the communication with the first user equipment in each of the allocable frequency blocks is lower than the total value of the indexes of the reception quality measured in the communication with the second user equipment in each of the allocable frequency blocks.

7. A communication system comprising:
the radio communication apparatus (BS) as described in any one of claims 1 to 6; and
a plurality of user equipments (UE#1 to UE#6) communicating with the radio communication apparatus (BS) using the frequency blocks allocated by the radio communication apparatus (BS).

8. The communication system according to claim 7,
wherein the user equipments (UE#1 to UE#6) each includes a reception quality measurement unit (60) measuring the downlink reception quality in each of the frequency blocks and a transmission unit (54) transmitting the reception quality measurement to the radio communication apparatus; and
wherein the frequency resource allocation unit (22) allocates the frequency blocks in the downlink based on the reception quality measured by the user equipments.

9. The communication system according to claim 7,
wherein the radio communication apparatus (BS) includes:
a reception quality measurement unit (23) measuring the uplink reception quality in each of the frequency blocks; and
a transmission unit (14) transmitting, to the user equipments, the frequency resource allocation signal indicating the uplink frequency blocks allocated to the user equipments by the frequency resource allocation unit (23) based on the reception quality measured by the reception quality measurement unit;
wherein the user equipments (UE#1 to UE#6) each includes:
a frequency resource allocation signal detection unit (61) detecting the frequency resource allocation signal from the signal received from the radio communication apparatus (BS); and
a mapping unit (53) for mapping the transmission signal to the frequency blocks designated by the frequency resource allocation signal detected.

10. A frequency resource allocation method allocating the frequency band for communication with a plurality of the user equipments (UE#1 to UE#6) from a predetermined frequency resource to a plurality of user equipments (UE#1 to UE#6), comprising:
selecting a predetermined number of the user equipments (UE#1 to UE#4) from a plurality of a plurality of the user equipments (UE#1 to UE#6) in connection; and
allocating the frequency blocks as divisions of the frequency resource to the selected user equipments (UE#1 to UE#4);
wherein the allocation of the frequency blocks includes allocation of the frequency blocks to the user equipments in the ascending order of reception quality measured in communication with the user equipments (UE#1 to UE#4), which is measured for each of selected user equipments in each allocable frequency block.

11. The frequency resource allocation method according to claim 10,
wherein the user equipments (UE#1 to UE#6) measure the downlink reception quality in each of the frequency blocks and transmits the downlink reception quality measurement to the radio communication apparatus (BS); and
wherein the radio communication apparatus (BS) allocates the downlink frequency blocks based on the downlink reception quality.

12. The frequency resource allocation method according to claim 10,
wherein the radio communication apparatus (BS) measures the uplink reception quality in each of the frequency blocks and transmits, to the user equipments (UE#1 to UE#6), the frequency resource allocation signal indicating the uplink frequency block allocated to the user equipments (UE#1 to UE#6) based on the uplink reception quality; and
wherein the user equipments (UE#1 to UE#6) detect the frequency resource allocation signal from the signal received from the radio communication apparatus (BS) and maps the transmission signal to the frequency blocks designated by the frequency resource allocation signal.
